# EUROPEAN PATENT APPLICATION

(11) **EP 3 561 324 A1**
(43) Date of publication of application: **30.10.2019**
(21) Application number: 19170801.5
(22) Date of filing: 24.04.2019
(51) Int. Cl.: F16C 19/18, F16C 25/08, F16C 33/58

(54) **BALL SCREW APPARATUS AND DOUBLE ROW BEARING DEVICE**

(30) Priority: 24.04.2018 JP 2018083228
(71) Applicant: JTEKT CORPORATION, Osaka 542-8502 (JP)
(72) Inventor: TOMIKAWA, Takashi, Osaka-shi, Osaka 542-8502 (JP)
(74) Representative: Winter, Brandl, Fürniss, Hübner, Röss, Kaiser, Polte - Partnerschaft mbB

(57) **Abstract**

Provided is a ball screw apparatus and a double row bearing device that reduce a pressing force required to sufficiently preload the double row bearing device, regardless of dimensions of the double row bearing device. A double row bearing device (10) includes an outer ring (120), a first inner ring body (131), a second inner ring body (141), and a protrusion. The first inner ring body (131) is provided on an outer circumferential surface of a tube portion (82) and is rotatable as a unit with the tube portion (82). The second inner ring body (141) fits on the outer circumferential surface of the tube portion (82) and is located to provide an axial clearance between the first inner ring body (131) and the second inner ring body (141). The protrusion includes at least one of a first portion and a second portion. The first portion protrudes toward the second inner ring body (141) from a first end face (136) of the first inner ring body (131) facing the second inner ring body (141). The second portion protrudes toward the first inner ring body (131) from a second end face (146) of the second inner ring body (141) facing the first inner ring body (131). The protrusion is smaller in projected area than the first end face (136) and the second end face (146) when viewed axially.

## Description

### BACKGROUND OF THE INVENTION

### 1. Field of the Invention

The invention relates to a ball screw apparatus and a double row bearing device.

### 2. Description of Related Art

Japanese Patent Application Publication No. 2017-210981 (JP 2017-210981 A) discloses a ball screw mechanism having a double row bearing device that rotatably supports a pulley with respect to the inner circumferential surface of a housing. The double row bearing device includes two rows of rolling elements, one outer ring, and two separate inner rings. A locknut presses the inner rings in the direction of a central axis to preload the double row bearing device.

According to the technique described in JP 2017-210981 A, the amount of pressing force that the locknut is required to apply to the inner rings in order to sufficiently preload the double row bearing device varies in accordance with stiffnesses of the inner rings. The stiffnesses of the inner rings vary in accordance with their radial dimensions, and radial thicknesses of the inner rings depend on radial dimensions of the double row bearing device (i.e., the inside diameter of the housing and the outside diameter of the pulley).

In summary, the pressing force required to preload the double row bearing device depends on the radial dimensions of the double row bearing device. Specifically, as the inner rings have larger radial dimensions, more pressing force is required to be applied to the inner rings.

### SUMMARY OF THE INVENTION

A purpose of the invention is to provide a ball screw apparatus and a double row bearing device that reduce a pressing force required to sufficiently preload the double row bearing device, regardless of dimensions of the double row bearing device.

An aspect of the invention provides a ball screw apparatus including the followings: a housing; a ball screw shaft having an outer circumferential surface provided with a helical outer ball rolling groove; a nut including a ball nut portion having an inner circumferential surface provided with a helical inner ball rolling groove, and a tube portion adjoining the ball nut portion in an axial direction; multiple rolling balls disposed between the outer ball rolling groove and the inner ball rolling groove; a double row bearing device that supports the tube portion such that the tube portion is rotatable relative to the housing; and a preloader that preloads the double row bearing device.

The double row bearing device includes the following: multiple first rolling elements arranged in a first row; multiple second rolling elements arranged in a second row; an outer ring; a first inner ring body; a second inner ring body; and a protrusion. The second row is located farther from the ball nut portion than the first row in the axial direction and is located next to the first row in the axial direction. The outer ring has a first outer ring raceway where the first rolling elements roll and has a second outer ring raceway where the second rolling elements roll. The first inner ring body is provided on an outer circumferential surface of the tube portion and is rotatable as a unit with the tube portion. The first inner ring body has a first inner ring raceway that faces the first outer ring raceway and where the first rolling elements roll. The second inner ring body fits on the outer circumferential surface of the tube portion and is located to provide an axial clearance between the first inner ring body and the second inner ring body. The second inner ring body has a second inner ring raceway that faces the second outer ring raceway and where the second rolling elements roll. The protrusion includes at least one of a first portion and a second portion. The first portion protrudes toward the second inner ring body from a first end face of the first inner ring body that faces the second inner ring body. The second portion protrudes toward the first inner ring body from a second end face of the second inner ring body that faces the first inner ring body. The protrusion is smaller in projected area than the first end face and the second end face when viewed axially. The preloader preloads the double row bearing device by pressing the first inner ring body and the second inner ring body against the ball nut portion such that the protrusion is compressively deformed axially.

Another aspect of the invention provides a double row bearing device that is configured to be used in a preloaded state and that includes the following: multiple first rolling elements arranged in a first row; multiple second rolling elements arranged in a second row that is located axially next to the first row; an outer ring having a first outer ring raceway where the first rolling elements roll and having a second outer ring raceway where the second rolling elements roll; a first inner ring body having a first inner ring raceway that faces the first outer ring raceway and where the first rolling elements roll; a second inner ring body located to provide an axial clearance between the first inner ring body and the second inner ring body and having a second inner ring raceway that faces the second outer ring raceway and where the second rolling elements roll; and a protrusion including at least one of a first portion and a second portion. The first portion protrudes toward the second inner ring body from a first end face of the first inner ring body that faces the second inner ring body. The second portion protrudes toward the first inner ring body from a second end face of the second inner ring body that faces the first inner ring body. The protrusion is smaller in projected area than the first end face and the second end face when viewed axially.

In the ball screw apparatus and the double row bearing device according to the above aspects, since the protrusion is smaller in projected area than the first end face and the second end face when viewed axially, the protrusion is lower in axial stiffness than the first inner ring body and the second inner ring body. Thus, when the double row bearing device is preloaded, the protrusion is distorted by a pressing force that is smaller than a pressing force required to distort the inner ring body and the second inner ring body.

Further, the double row bearing device allows the shape of the protrusion to be designed independently of the radial dimensions of the first inner ring body and the second inner ring body. Thus, in the double row bearing device, the amount of axial compressive deformation of the protrusion caused by the pressing force from the preloader is controllable by designing the shape of the protrusion such that the protrusion has desired stiffness. This allows the double row bearing device to be sufficiently preloaded by a small pressing force, regardless of the dimensions of the double row bearing device.

Thus, this allows a reduction in the amount of axial compressive deformation of the first inner ring body and the second inner ring body when the double row bearing device is in a sufficiently preloaded state. Therefore, the double row bearing device is desirably preloadable while suppressing deformation of the first inner ring raceway and the second inner ring raceway.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram of a steering system according to a first embodiment of the invention;
FIG. 2 is an enlarged cross sectional view of a portion of the steering system and illustrates how a steering assist apparatus and a ball screw apparatus are mounted;
FIG. 3 is an enlarged view of FIG. 2 and illustrates how a double row bearing device is mounted;
FIG. 4 is a diagram illustrating either a first inner ring or a second inner ring when viewed in the direction of a central axis;
FIG. 5 is a diagram corresponding to FIG. 3 and illustrates the double row bearing device before being preloaded;
FIG. 6 is an enlarged view of a portion of a ball screw apparatus according to a second embodiment and illustrates how a double row bearing device is mounted; and
FIG. 7 is an enlarged view of a portion of a ball screw apparatus according to a third embodiment and illustrates how a double row bearing device is mounted.

### DETAILED DESCRIPTION OF EMBODIMENTS

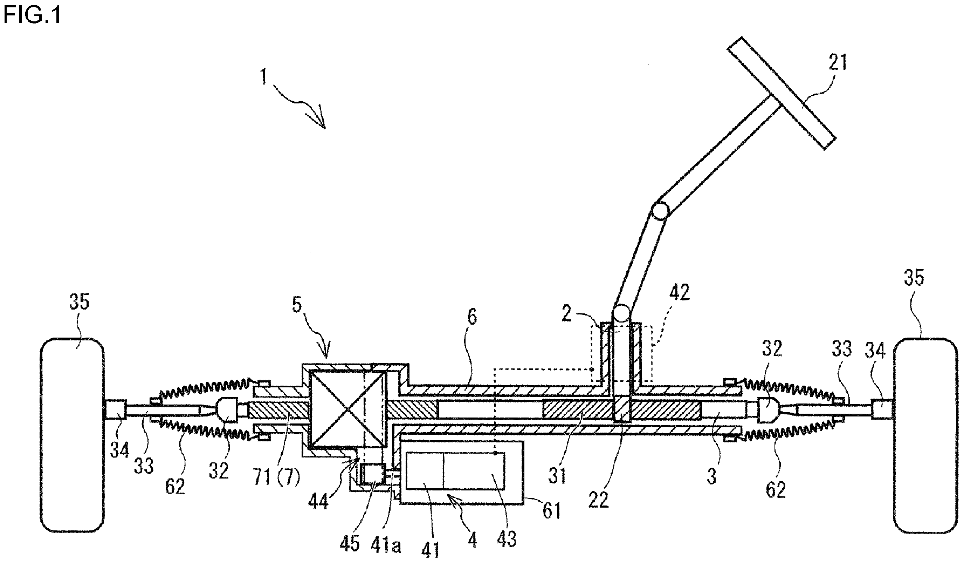

A ball screw apparatus and a double row bearing device according to embodiments of the invention are described below with reference to the drawings. First, a schematic structure of a steering system 1 that uses a ball screw apparatus 5 and a double row bearing device 10 according to a first embodiment is described with reference to FIG. 1.

As illustrated in FIG. 1, the steering system 1 mainly includes a steering shaft member 2, a steered shaft member 3, a steering assist apparatus 4, and the ball screw apparatus 5. A first axial end of the steering shaft member 2 is fixed to a steering member 21 that a driver operates to steer a vehicle. A second axial end of the steering shaft member 2 has a pinion 22 that forms a rack and pinion mechanism.

The steered shaft member 3 includes a rack 31 in mesh with the pinion 22. The rack 31 works in conjunction with the pinion 22 to form the rack and pinion mechanism. A maximum axial force that is transmissible by the rack and pinion mechanism between the steering shaft member 2 and the steered shaft member 3 is set taking into account various factors, such as what the steering system 1 is used for. Each axial end of the steered shaft member 3 is provided with a joint 32. The joint 32 is coupled at one end to a tie rod 33. The tie rod 33 is coupled at one end to a steered wheel 35 via a knuckle arm 34.

In the steering system 1, the rack and pinion mechanism converts steering torque applied to the steering shaft member 2 into a force in an axial direction of the steered shaft member 3, and applies the axial force to the steered shaft member 3, thereby moving the steered shaft member 3 in the axial direction. The movement of the steered shaft member 3 in the axial direction turns the steered wheels 35.

The steering assist apparatus 4 supplies the steered shaft member 3 with a steering assist force. The steering assist apparatus 4 includes a motor 41, a torque sensor 42, a controller 43, and a drive force transmission unit 44. The motor 41 generates the steering assist force to be supplied to the steered shaft member 3. The torque sensor 42 detects the steering torque that is applied to the steering shaft member 2 in accordance with the operation of the steering member 21. The controller 43 determines, on the basis of an output signal of the torque sensor 42, the amount of steering assist torque required to be supplied to the steered shaft member 3, and controls an output of the motor 41 correspondingly.

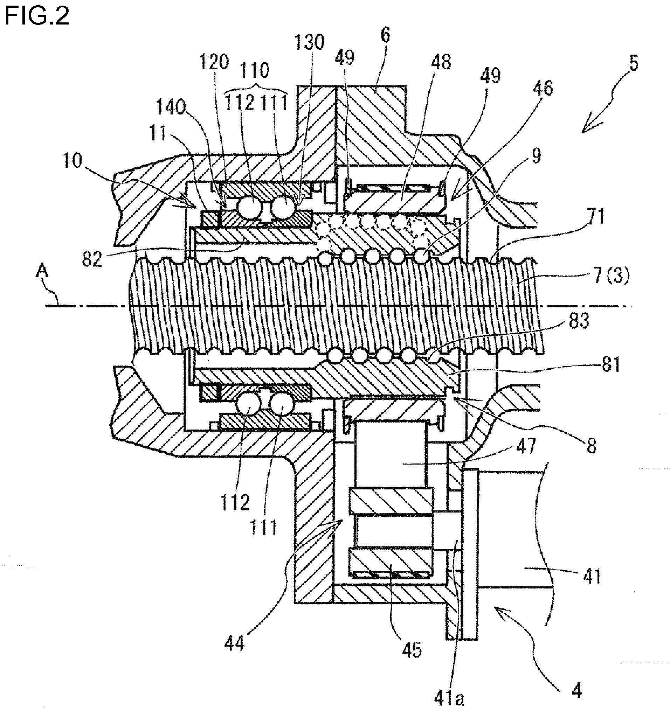

As illustrated in FIG. 2, the drive force transmission unit 44 includes a driving pulley 45, a driven pulley 46, and a toothed belt 47. Each of the driving pulley 45 and the driven pulley 46 is a toothed pulley with external helical teeth. The toothed belt 47 is a rubber closed-loop belt having an inner circumferential surface with internal helical teeth.

The driving pulley 45 is a tubular member and is located in an offset position relative to a central axis A of the steered shaft member 3. The driving pulley 45 is mounted on an output shaft 41a of the motor 41 and is rotatable as a unit with the output shaft 41a. The driven pulley 46 is a tubular member and is coaxially located with respect to the steered shaft member 3. The driven pulley 46 includes a pulley body 48 and rib portions 49. The pulley body 48 has external teeth formed thereon. The rib portions 49 fit on different axial sides of the pulley body 48 across the external teeth. Each of the rib portions 49 has an annular shape with a diameter greater than that of the pulley body 48 and is fixed to the pulley body 48 by a press fit.

The toothed belt 47 is wrapped around the driving pulley 45 and the driven pulley 46 with its internal teeth in mesh with the external teeth of the driving pulley 45 and the driven pulley 46. The drive force transmission unit 44 transmits a rotational drive force between the driving pulley 45 and the driven pulley 46.

The ball screw apparatus 5 mainly includes a housing 6, a ball screw shaft 7, a nut 8, multiple rolling balls 9, and the double row bearing device 10. The housing 6 is a tubular member and houses the steered shaft member 3. The housing 6 is fixed to a vehicle body. A case 61 (refer to FIG. 1) that houses the motor 41 and the controller 43 is fixed to the housing 6. The case 61 communicates with the housing 6, and the output shaft 41a of the motor 41 is located inside the housing 6.

Each axial end of the housing 6 is provided with a boot 62. The boot 62 is a bellows-shaped tube and is extendable and retractable in the direction of the central axis A of the steered shaft member 3. The boot 62 is fixed at one end to the housing 6 and at the other end to the tie rod 33. The boot 62 covers a coupling portion between the joint 32 and the tie rod 33 to reduce the likelihood of extraneous matters entering the joint 32 and the housing 6.

The ball screw shaft 7 has an outer circumferential surface provided with a helical outer ball rolling groove 71. According to the first embodiment, the ball screw shaft 7 is part of the steered shaft member 3, and the outer ball rolling groove 71 is formed in an outer circumferential surface of the steered shaft member 3 without overlapping the rack 31.

The nut 8 includes a ball nut portion 81 and a tube portion 82. The ball nut portion 81 is tubular in shape and has an inner circumferential surface provided with a helical inner ball rolling groove 83. The inner ball rolling groove 83 is located around the outer ball rolling groove 71 formed in the ball screw shaft 7. The driven pulley 46 is mounted on an outer circumferential surface of the ball nut portion 81 and is rotatable as a unit with the ball nut portion 81. Thus, the nut 8 is coupled to the motor 41 via the drive force transmission unit 44 so that the rotational drive force of the motor 41 is transmitted to the nut 8 via the drive force transmission unit 44. That is, the nut 8 rotates about the central axis A by being driven by the motor 41.

The tube portion 82 adjoins the ball nut portion 81 in an axial direction of the nut 8 (i.e., in the direction of the central axis A) and is smaller in outside diameter than the ball nut portion 81. An outer circumferential surface of the tube portion 82 is supported on an inner circumferential surface of the housing 6 via the double row bearing device 10 such that the tube portion 82 is allowed to rotate relative to the housing 6.

The rolling balls 9 are rollably disposed between the outer ball rolling groove 71 and the inner ball rolling groove 83. The outer ball rolling groove 71 and the inner ball rolling groove 83 threadedly engages with the rolling balls 9. The rolling balls 9 circulate endlessly through a pair of deflectors (not illustrated) and a path (not illustrated) that connects the pair of deflectors.

To summarize so far, when the steering assist apparatus 4 drives the motor 41 in accordance with the operation of the steering member 21, the output shaft 41a of the motor 41 rotates, and the rotational drive force is transmitted to the nut 8 via the drive force transmission unit 44. Then, the ball screw apparatus 5 transmits the rotational drive force transmitted to the nut 8 to the steered shaft member 3 serving as the ball screw shaft 7 via the rolling balls 9, thus moving the steered shaft member 3 in the direction of the central axis A.

Next, the double row bearing device 10 is described with reference to FIGS. 2 to 4. As illustrated in FIG. 2, the double row bearing device 10 is a double row angular contact ball bearing and rotatably supports the nut 8 with respect to the housing 6. The double row bearing device 10 mainly includes two rows of rolling elements 110, an outer ring 120, a first inner ring 130, and a second inner ring 140.

The two rows of rolling elements 110 are located next to each other in an axial direction of the ball screw apparatus 5 (i.e., in the direction of the central axis A). The two rows of rolling elements 110 include multiple first rolling elements 111 arranged in a first row and multiple second rolling elements 112 arranged in a second row. The first row is located closer to the ball nut portion 81 than the second row and is the right one of the two rows in FIG. 2. The first rolling elements 111 in the first row are rollably disposed between the outer ring 120 and the first inner ring 130. The second row is located farther from the ball nut portion 81 than the first row and is the left one of the two rows in FIG. 2. The second rolling elements 112 in the second row are rollably disposed between the outer ring 120 and the second inner ring 140.

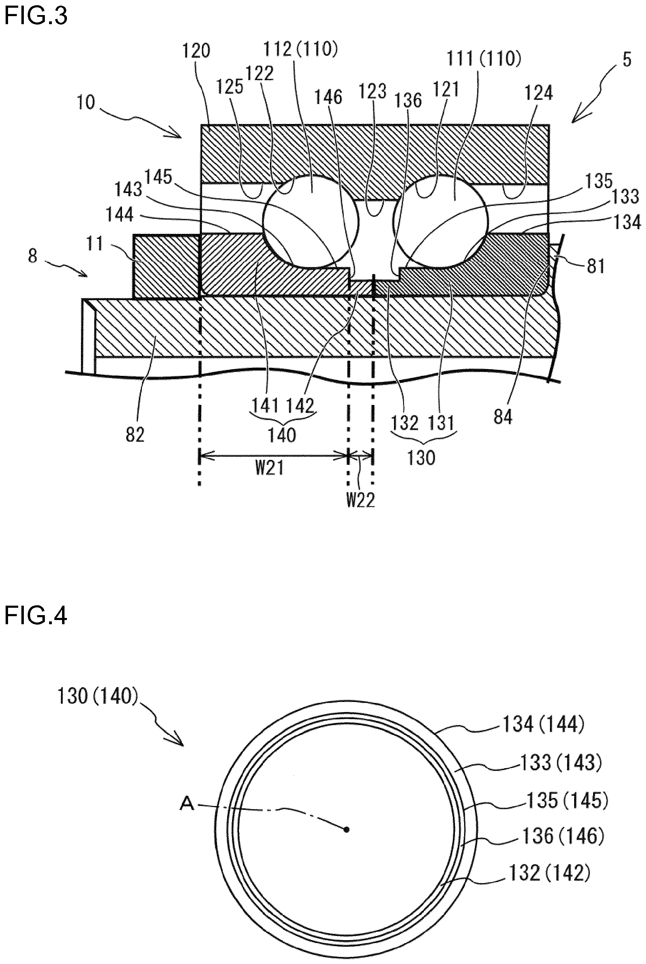

As illustrated in FIG. 3, the outer ring 120 has a tubular shape and is located in a position corresponding to the tube portion 82 of the nut 8. The outer ring 120 is mounted on the inner circumferential surface of the housing 6 such that axial movement of the outer ring 120 relative to the housing 6 is not allowed. The outer ring 120 includes a first outer ring raceway 121 and a second outer ring raceway 122. The first outer ring raceway 121 forms a rolling contact surface where the first rolling elements 111 roll. The second outer ring raceway 122 forms a rolling contact surface where the second rolling elements 112 roll. The first outer ring raceway 121 and the second outer ring raceway 122 are axially arranged back to back.

The outer ring 120 further includes an outer ring small-diameter extension 123 that connects the first outer ring raceway 121 and the second outer ring raceway 122. The outer ring small-diameter extension 123 extends in the axial direction of the outer ring 120 and is smaller in inside diameter than the rest of the outer ring 120. The outer ring 120 further includes a first outer large-diameter extension 124 extending from the first outer ring raceway 121 in a first direction along the axial direction (to the right in FIG. 3), and a second outer large-diameter extension 125 extending from the second outer ring raceway 122 in a second direction along the axial direction (to the left in FIG. 3). The first outer large-diameter extension 124 and the second outer large-diameter extension 125 extend in the axial direction of the outer ring 120 and are larger in inside diameter than the rest of the outer ring 120.

As illustrated in FIGS. 3 and 4, the first inner ring 130 has a cylindrical shape and is a separate piece from the nut 8. The first inner ring 130 fits on the outer circumferential surface of the tube portion 82 at a position where the first inner ring 130 mainly faces the first outer ring raceway 121. The first inner ring 130 includes a first inner ring body 131 and a first protrusion 132.

The first inner ring body 131 has a cylindrical shape that is fittable on the outer circumferential surface of the tube portion 82. The inside diameter of the first inner ring body 131 is equal to the outside diameter of the tube portion 82. The first inner ring body 131 fits on the outer circumferential surface of the tube portion 82, and movement of the first inner ring body 131 toward the ball nut portion 81 is not allowed by a flange surface 84 that connects the outer circumferential surface of the ball nut portion 81 and the outer circumferential surface of the tube portion 82. The first inner ring body 131 includes a first inner ring raceway 133, a first inner ring large-diameter extension 134, and a first inner ring small-diameter extension 135.

The first inner ring raceway 133 faces the first outer ring raceway 121 and forms a rolling contact surface where the first rolling elements 111 roll. The point of contact between the first inner ring raceway 133 and each of the first rolling elements 111 is displaced from the center of the first rolling element 111 in the first direction along the axial direction (to the right in FIG. 3). The point of contact between the first outer ring raceway 121 and each of the first rolling elements 111 is displaced from the center of the first rolling element 111 in the second direction along the axial direction (to the left in FIG. 3).

The first inner ring large-diameter extension 134 extends from the first inner ring raceway 133 in the first direction along the axial direction (to the right in FIG. 3), i.e., extends toward the ball nut portion 81. The first inner ring large-diameter extension 134 extends in an axial direction of the first inner ring 130 and is larger in outside diameter than the rest of the first inner ring 130. The first inner ring small-diameter extension 135 extends from the first inner ring raceway 133 in the second direction along the axial direction (to the left in FIG. 3), i.e., extends away from the ball nut portion 81. The first inner ring small-diameter extension 135 extends in the axial direction of the first inner ring 130 and is smaller in outside diameter than the rest of the first inner ring body 131.

The first protrusion 132 has an annular shape and protrudes toward the second inner ring 140 from a first end face 136 of the first inner ring body 131 that faces the second inner ring 140. The first protrusion 132 is smaller in outside diameter than the first inner ring small-diameter extension 135. The first protrusion 132 is equal in inside diameter to the first inner ring body 131. That is, the first protrusion 132 is smaller in radial thickness than the first end face 136, and the projected area of the first protrusion 132 when viewed in the axial direction of the first inner ring 130 is smaller than the projected area of the first end face 136 (the area of the first end face 136 including a portion joined to the first protrusion 132) when viewed in the axial direction of the first inner ring 130.

The second inner ring 140 has a cylindrical shape and is a separate piece from the nut 8. The second inner ring 140 fits on the outer circumferential surface of the tube portion 82 at a position where the second inner ring 140 mainly faces the second outer ring raceway 122. The second inner ring 140 includes a second inner ring body 141 and a second protrusion 142.

The second inner ring body 141 has a cylindrical shape that is fittable on the outer circumferential surface of the tube portion 82. The inside diameter of the second inner ring body 141 is equal to the outside diameter of the tube portion 82. The second inner ring body 141 fits on the outer circumferential surface of the tube portion 82 and is located to provide an axial clearance between the first inner ring body 131 and the second inner ring body 141. The second inner ring body 141 includes a second inner ring raceway 143, a second inner ring large-diameter extension 144, and a second inner ring small-diameter extension 145.

The second inner ring raceway 143 faces the second outer ring raceway 122 and forms a rolling contact surface where the second rolling elements 112 roll. The point of contact between the second inner ring raceway 143 and each of the second rolling elements 112 is displaced from the center of the second rolling element 112 in the second direction along the axial direction (to the left in FIG. 3). The point of contact between the second outer ring raceway 122 and each of the second rolling elements 112 is displaced from the center of the second rolling element 112 in the first direction along the axial direction (to the right in FIG. 3).

The second inner ring large-diameter extension 144 extends from the second inner ring raceway 143 in the second direction along the axial direction (to the left in FIG. 3), i.e., extends away from the ball nut portion 81 and the first inner ring 130. The second inner ring large-diameter extension 144 extends in the axial direction of the second inner ring 140 and is larger in outside diameter than the rest of the second inner ring 140. The second inner ring small-diameter extension 145 extends from the second inner ring raceway 143 in the first direction along the axial direction (to the right in FIG. 3), i.e., extends toward the ball nut portion 81 and the first inner ring 130. The second inner ring small-diameter extension 145 extends in the axial direction of the second inner ring 140 and is smaller in outside diameter than the rest of the second inner ring body 141.

The second protrusion 142 has an annular shape and protrudes toward the first inner ring 130 from a second end face 146 of the second inner ring body 141 that faces the first inner ring 130. The second protrusion 142 is smaller in outside diameter than the second inner ring small-diameter extension 145. The second protrusion 142 is equal in inside diameter to the second inner ring body 141. That is, the second protrusion 142 is smaller in radial thickness than the second end face 146, and the projected area of the second protrusion 142 when viewed in an axial direction of the second inner ring 140 is smaller than the projected area of the second end face 146 (the area of the second end face 146 including a portion joined to the second protrusion 142) when viewed in the axial direction of the second inner ring 140.

The first inner ring 130 and the second inner ring 140 are identical in shape. The first inner ring 130 and the second inner ring 140 fit on the outer circumferential surface of the tube portion 82 such that the first protrusion 132 and the second protrusion 142 face each other in the direction of the central axis A. As described above, the first inner ring 130 and the second inner ring 140 of the double row bearing device 10 are identical in shape. This allows commonality of parts between the first inner ring 130 and the second inner ring 140.

Further, the first protrusion 132 is equal in inside diameter to the first inner ring body 131, and the second protrusion 142 is equal in inside diameter to the second inner ring body 141. This facilitates forming the first protrusion 132 and the second protrusion 142 when manufacturing the first inner ring 130 and the second inner ring 140.

Further, the first inner ring 130 is shaped such that the inner circumferential surface of the first inner ring body 131 and the inner circumferential surface of the first protrusion 132 are flush with each other. This increases the area of contact between the inner circumferential surface of the first inner ring 130 and the outer circumferential surface of the tube portion 82. Likewise, the second inner ring 140 is shaped such that the inner circumferential surface of the second inner ring body 141 and the inner circumferential surface of the second protrusion 142 are flush with each other. This increases the area of contact between the inner circumferential surface of the second inner ring 140 and the outer circumferential surface of the tube portion 82. The increased contact areas reduce backlash between the tube portion 82 and each of the first inner ring 130 and the second inner ring 140.

The ball screw apparatus 5 further includes a preloader 11. According to the first embodiment, the preloader 11 is a locknut having an inner circumferential surface provided with an internal thread that threadedly engages with an external thread formed on the outer circumferential surface of the tube portion 82. The ball screw apparatus 5 threadedly engages the preloader 11 with the tube portion 82 to press the first inner ring 130 and the second inner ring 140 against the ball nut portion 81, thereby preloading the double row bearing device 10.

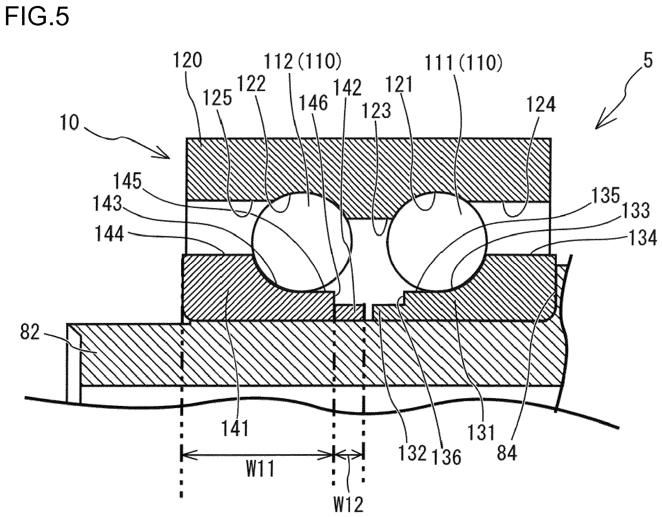

Next, conditions of the first inner ring 130 and the second inner ring 140 when the double row bearing device 10 is preloaded are described. As illustrated in FIG. 5, before the double row bearing device 10 is preloaded, the first protrusion 132 of the first inner ring 130 fitting on the outer circumferential surface of the tube portion 82 is not in contact with the second protrusion 142 of the second inner ring 140 fitting on the outer circumferential surface of the tube portion 82, and consequently no compressive deformation occurs in the direction of the central axis A. Before the double row bearing device 10 is preloaded, the second inner ring body 141 has an axial width W11, and the second protrusion 142 has an axial width W12.

As illustrated in FIG. 3, to preload the double row bearing device 10, the first inner ring 130 and the second inner ring 140 are sandwiched between the flange surface 84 and the preloader 11 that is threadedly engaged with the tube portion 82. Under this condition, when the preloader 11 is tightened, the first inner ring 130 and the second inner ring 140 are pressed against the ball nut portion 81 (i.e., against the flange surface 84) and are compressively deformed accordingly. Thus, the double row bearing device 10 is brought into a sufficiently preloaded state where internal clearance in the double row bearing device 10 becomes negative. Making the internal clearance in the double row bearing device 10 negative reduces the likelihood of rattle noise and backlash occurring, thus improving durability of the double row bearing device 10. Further, this allows the steering system 1 (refer to FIG. 1) to smoothly transmit the driving force of the motor 41 to the steered shaft member 3, thus improving steering feel.

In the preloaded state, the second inner ring body 141 has an axial width W21, and the second protrusion 142 has an axial width W22. The amount of axial compressive deformation of the first inner ring body 131 and the second inner ring body 141 (e.g., W11 - W21) in the preloaded state is smaller than the amount of axial compressive deformation of the first protrusion 132 and the second protrusion 142 (e.g., W12 - W22) in the preloaded state.

This is because, since the first protrusion 132 and the second protrusion 142 are smaller in projected area than the first end face 136 and the second end face 146 when viewed axially, the first protrusion 132 and the second protrusion 142 are lower in axial stiffness than the first inner ring body 131 and the second inner ring body 141. Thus, when the double row bearing device 10 is preloaded, the first protrusion 132 and the second protrusion 142 are distortable by a pressing force that is smaller than a pressing force required to distort the first inner ring body 131 and the second inner ring body 141. This allows a reduction in the pressing force that is required to press the preloader 11 against the first inner ring 130 and the second inner ring 140 until the internal clearance in the double row bearing device 10 becomes negative. Thus, the double row bearing device 10 helps to reduce the cost of equipment that is used to tighten the preloader 11.

Although the stiffnesses of the first inner ring body 131 and the second inner ring body 141 respectively depend on the radial thicknesses of the first inner ring body 131 and the second inner ring body 141, the radial thicknesses of the first inner ring body 131 and the second inner ring body 141 are determined by the dimensions of the double row bearing device 10 (i.e., the inside diameter of the housing 6 and the outside diameter of the tube portion 82). Therefore, the double row bearing device 10 has less flexibility in designing the shapes of the first inner ring body 131 and the second inner ring body 141. This makes it difficult to control the amount of axial compressive deformation of the first inner ring body 131 and the second inner ring body 141 caused by the axial pressing force from the preloader 11.

The first protrusion 132 and the second protrusion 142 allow more design flexibility than the first inner ring body 131 and the second inner ring body 141. Thus, the double row bearing device 10 allows the shapes of the first protrusion 132 and the second protrusion 142 to be designed independently of the radial dimensions of the first inner ring body 131 and the second inner ring body 141. In the double row bearing device 10, the amount of axial compressive deformation of the first protrusion 132 and the second protrusion 142 caused by the axial pressing force from the preloader 11 is controllable by the design of the shapes of the first protrusion 132 and the second protrusion 142 (e.g., the axial lengths of the first protrusion 132 and the second protrusion 142). Thus, the double row bearing device 10 is sufficiently preloadable by a small pressing force, regardless of the radial thicknesses of the first inner ring body 131 and the second inner ring body 141. This increases design flexibility of the double row bearing device 10 and, in turn, increases design flexibility of the ball screw apparatus 5.

Further, this allows a reduction in the amount of axial compressive deformation of the first inner ring body 131 and the second inner ring body 141 when the double row bearing device 10 is in a sufficiently preloaded state. In this case, the double row bearing device 10 is desirably preloadable while suppressing deformation of the first inner ring raceway 133 and the second inner ring raceway 143, thus allowing smooth rolling of the first rolling elements 111 and the second rolling elements 112.

Further, the ball screw apparatus 5 uses a locknut as the preloader 11. This suppresses radial deformation of the tube portion 82, compared to when the double row bearing device 10 is preloaded by swaging an end (a left end in FIG. 3) of the tube portion 82 in the second direction along the axial direction. Thus, the ball screw apparatus 5 appropriately preloads the double row bearing device 10 while suppressing deformation of the first inner ring raceway 133 and other related elements.

In addition, the inside diameters of the first inner ring 130 and the second inner ring 140 are each equal to the outside diameter of the tube portion 82. That is, neither the first inner ring 130 nor the second inner ring 140 has an interference for press-fitting of the tube portion 82 on their inner circumferential surfaces. Thus, variations in the internal clearance in the double row bearing device 10 are reduced, compared to when the first inner ring 130 and the second inner ring 140 are press-fitted on the tube portion 82.

Assuming that the first inner ring 130 and the second inner ring 140 have an interference, the first inner ring 130 and the second inner ring 140 are expanded radially outward by press-fit of the first inner ring 130 and the second inner ring 140 on the tube portion 82. Effects due to the radially outward expansion of the first inner ring 130 and the second inner ring 140 caused by the press-fit need to be considered to control the internal clearance in the double row bearing device 10. In addition, since the effects vary depending on the stiffnesses of the first inner ring 130 and the second inner ring 140, variations in the internal clearance are likely to occur.

In this regard, according to the first embodiment, the double row bearing device 10 reduces the likelihood of the first inner ring 130 and the second inner ring 140 being radially pressed and expanded when being fitted on the tube portion 82. Thus, the internal clearance in the double row bearing device 10 is more accurately controlled by design of the shapes of the first protrusion 132 and the second protrusion 142.

If the preloader 11 is tightened too much with respect to the tube portion 82, tensile stress exerted on an end (farther from the ball nut portion 81) of the tube portion 82 in the second direction along the axial direction may increase so much that the ball nut portion 81 may be deformed. In this regard, according to the first embodiment, the second protrusion 142 of the second inner ring 140 enables a small pressing force from the preloader 11 to sufficiently preload the double row bearing device 10.

Thus, the ball screw apparatus 5 prevents deformation of the ball nut portion 81 that may be caused by too much tightening of the locknut as the preloader 11. Thus, in the ball screw apparatus 5, the rolling balls 9 smoothly roll between the outer ball rolling groove 71 and the inner ball rolling groove 83.

As described above, the first inner ring 130 includes the first protrusion 132 that is lower in axial stiffness than the first inner ring body 131, and the second inner ring 140 includes the second protrusion 142 that is lower in axial stiffness than the second inner ring body 141. Thus, when the double row bearing device 10 is preloaded, the first protrusion 132 and the second protrusion 142 are distortable by a pressing force that is smaller than a pressing force required to distort the first inner ring body 131 and the second inner ring body 141.

Further, in the double row bearing device 10, the amount of axial compressive deformation of the first protrusion 132 and the second protrusion 142 caused by the pressing force from the preloader 11 is controllable by designing the shapes of the first protrusion 132 and the second protrusion 142 such that the first protrusion 132 and the second protrusion 142 have desired stiffnesses. Thus, the double row bearing device 10 is sufficiently preloadable by a small pressing force, regardless of the radial thicknesses of the first inner ring body 131 and the second inner ring body 141.

This allows a reduction in the amount of axial compressive deformation of the first inner ring body 131 and the second inner ring body 141 when the double row bearing device 10 is in a sufficiently preloaded state. Thus, the double row bearing device 10 is desirably preloadable while suppressing deformation of the first inner ring raceway 133 and the second inner ring raceway 143.

Next, a second embodiment is described. According to the first embodiment, the first inner ring 130 is a separate piece from the tube portion 82. In contrast, according to the second embodiment, a first inner ring 230 is unitary with the outer circumferential surface of the tube portion 82. Elements common between the first and second embodiments are denoted by the same reference symbols and are not described again.

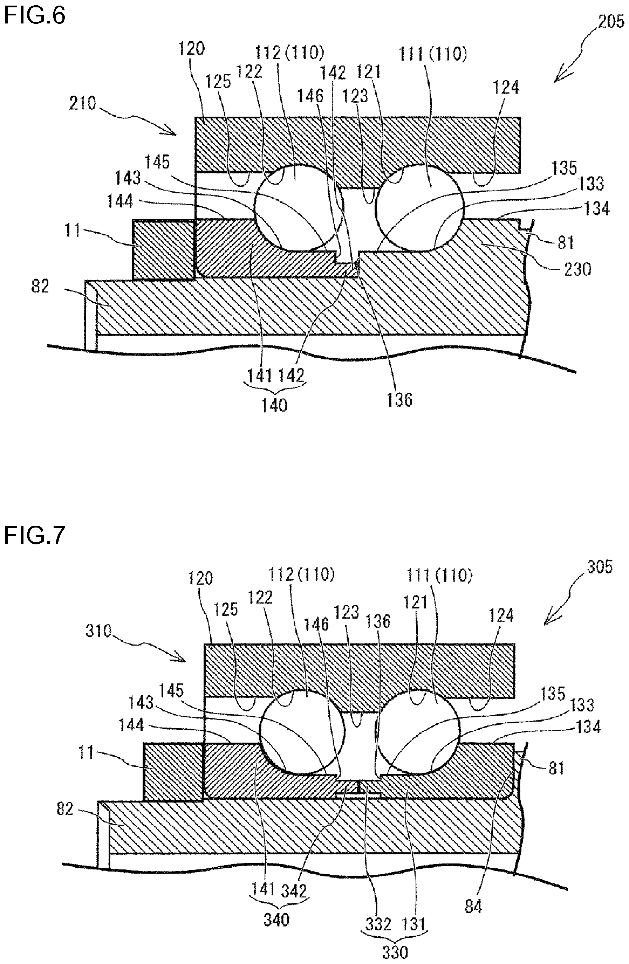

As illustrated in FIG. 6, a double row bearing device 210 according to the second embodiment includes the following: the two rows of rolling elements 110; the outer ring 120; the first inner ring 230 unitary with the outer circumferential surface of the tube portion 82; and the second inner ring 140. Since the first inner ring 230 is unitary with the outer circumferential surface of the tube portion 82, the number of parts in a ball screw apparatus 205 according to the second embodiment is reduced accordingly. Unlike the first inner ring 130 of the first embodiment, the first inner ring 230 of the second embodiment has no first protrusion on the first end face 136 that faces the second inner ring 140.

Next, conditions of the first inner ring 230 and the second inner ring 140 when the double row bearing device 210 is preloaded are described. The first inner ring 230 is unitary with the nut 8 while the second inner ring 140 is a separate piece from the nut 8. Thus, the first inner ring 230 has greater stiffness than the second inner ring 140.

The amount of axial compressive deformation of the second protrusion 142 caused when the double row bearing device 210 is preloaded is controllable by design of the shape of the second protrusion 142 provided on the second inner ring 140. This enables a small pressing force to sufficiently preload the double row bearing device 210, although the first inner ring 230 is unitary with the tube portion 82 and thus has greater stiffness.

Next, a third embodiment is described. According to the first embodiment, the inside diameters of the first and second protrusions 132 and 142 are respectively equal to the inside diameters of the first and second inner ring bodies 131 and 141. In contrast, according to the third embodiment, the inside diameters of first and second protrusions 332 and 342 are respectively larger than the inside diameters of the first and second inner ring bodies 131 and 141. Elements common between the first, second, and third embodiments are denoted by the same reference symbols and are not described again.

As illustrated in FIG. 7, a double row bearing device 310 according to the third embodiment includes the two rows of rolling elements 110, the outer ring 120, a first inner ring 330, and a second inner ring 340. The first inner ring 330 includes the first protrusion 332 that has an annular shape and that protrudes from the first end face 136 toward the second inner ring 340. The second inner ring 340 includes the second protrusion 342 that has an annular shape and that protrudes from the second end face 146 toward the first inner ring 330.

The outside diameters of the first and second protrusions 332 and 342 are respectively smaller than the outside diameters of the first and second inner ring small-diameter extensions 135 and 145. The inside diameters of the first and second protrusions 332 and 342 are respectively larger than the inside diameters of the first and second inner ring bodies 131 and 141. This structure provides a clearance between the inner circumferential surface of the first protrusion 332 and the outer circumferential surface of the tube portion 82, and provides a clearance between the inner circumferential surface of the second protrusion 342 and the outer circumferential surface of the tube portion 82. Thus, in the double row bearing device 310, when the first protrusion 332 and the second protrusion 342 are distorted, the first protrusion 332 and the second protrusion 342 are compressively deformed radially inward. This allows the double row bearing device 310 to be sufficiently preloaded by a small pressing force.

Further, the inside diameters of the first and second protrusions 332 and 342 are larger than the outside diameter of the tube portion 82. This structure facilitates fitting the first inner ring 130 and the second inner ring 140 on the tube portion 82, thus improving assemblability of the ball screw apparatus 305. Further, the double row bearing device 310 reduces the likelihood of the first protrusion 332 and the second protrusion 342 being pressed and expanded radially outward when the first inner ring 330 and the second inner ring 340 are fitted on the tube portion 82. Thus, in the double row bearing device 310, the amount of axial compressive deformation of the first protrusion 332 and the second protrusion 342 caused by the pressing force from the preloader 11 is more accurately controlled.

While some aspects of the invention have been described with reference to illustrative embodiments, the invention is not limited to the embodiments. It will be understood by those skilled in the art that various modifications and improvements are possible without departing from the scope of the invention. For example, although the embodiments illustrate that the double row bearing device 10 is a double row angular contact ball bearing, the double row bearing device 10 may be any other type of double row bearing that is used in a preloaded state, such as a double row tapered roller bearing.

Although the embodiments illustrate that a locknut is used as the preloader 11, the preloader 11 is not limited to a locknut. In the ball screw apparatuses 5, 205, and 305, any other suitable member, such as a snap ring, may be used as the preloader 11. In the ball screw apparatuses 5, 205, and 305, the double row bearing devices 10, 210, and 310 may be preloaded by swaging an end of the tube portion 82 in the second direction along the axial direction. In this case, the axial end of the tube portion 82 is swaged into a radially expanded shape that serves as a preloader.

Although the embodiments illustrate that the inside diameters of the first inner rings 130, 230, and 330 and the second inner rings 140 and 340 are each equal to the outside diameter of the tube portion 82, the inside diameters of the first inner rings 130, 230, and 330 and the second inner rings 140 and 340 may each be smaller than the outside diameter of the tube portion 82. That is, the first inner rings 130, 230, and 330, and the second inner rings 140 and 340 may have an interference for press-fitting of the tube portion 82 on their inner circumferential surfaces.

Although the embodiments illustrate that the first protrusions 132 and 332 and the second protrusions 142 and 342 have circumferentially continuous closed annular shapes, the first and second protrusions may be each divided into multiple portions that are circumferentially spaced from each other. This structure reduces the stiffnesses of the first and second protrusions of the double row bearing device.

## Claims

1. A ball screw apparatus comprising:
a housing;
a ball screw shaft having an outer circumferential surface provided with a helical outer ball rolling groove;
a nut including a ball nut portion and a tube portion, the ball nut portion having an inner circumferential surface provided with a helical inner ball rolling groove, the tube portion adjoining the ball nut portion in an axial direction;
a plurality of rolling balls disposed between the outer ball rolling groove and the inner ball rolling groove;
a double row bearing device that supports the tube portion such that the tube portion is rotatable relative to the housing; and
a preloader that preloads the double row bearing device, wherein
the double row bearing device includes a plurality of first rolling elements arranged in a first row, a plurality of second rolling elements arranged in a second row, an outer ring, a first inner ring body, a second inner ring body, and a protrusion,
the second row is located farther from the ball nut portion than the first row in the axial direction and is located next to the first row in the axial direction,
the outer ring has a first outer ring raceway where the plurality of first rolling elements rolls, and a second outer ring raceway where the plurality of second rolling elements rolls,
the first inner ring body is provided on an outer circumferential surface of the tube portion and is rotatable as a unit with the tube portion, the first inner ring body having a first inner ring raceway where the plurality of first rolling elements rolls, the first inner ring raceway facing the first outer ring raceway,
the second inner ring body fits on the outer circumferential surface of the tube portion and is located to provide an axial clearance between the first inner ring body and the second inner ring body, the second inner ring body having a second inner ring raceway where the plurality of second rolling elements rolls, the second inner ring raceway facing the second outer ring raceway,
the protrusion includes at least one of a first portion and a second portion,
the first portion protrudes toward the second inner ring body from a first end face of the first inner ring body, the first end face facing the second inner ring body,
the second portion protrudes toward the first inner ring body from a second end face of the second inner ring body, the second end face facing the first inner ring body,
the protrusion is smaller in projected area than the first end face and the second end face when viewed axially, and
the preloader preloads the double row bearing device by pressing the first inner ring body and the second inner ring body against the ball nut portion such that the protrusion is compressively deformed axially.

2. The ball screw apparatus according to claim 1, wherein
the protrusion includes a first protrusion as the first portion and a second protrusion as the second portion,
the first inner ring body is a separate piece from the tube portion,
the first inner ring body and the first protrusion are respectively identical in shape to the second inner ring body and the second protrusion, and
the first protrusion and the second protrusion axially face each other.

3. The ball screw apparatus according to claim 1, wherein
the first inner ring body is unitary with the outer circumferential surface of the tube portion, and
the protrusion includes a second protrusion as the second portion.

4. The ball screw apparatus according to claim 2 or 3, wherein
an inside diameter of the second inner ring body is equal to an outside diameter of the tube portion.

5. The ball screw apparatus according to any one of claims 1 to 4, wherein
the protrusion is equal in inside diameter to the second inner ring body.

6. The ball screw apparatus according to any one of claims 1 to 4, wherein
the protrusion is larger in inside diameter than the first inner ring body and the second inner ring body.

7. A double row bearing device configured to be used in a preloaded state, the double row bearing device comprising:
a plurality of first rolling elements arranged in a first row;
a plurality of second rolling elements arranged in a second row that is located axially next to the first row;
an outer ring having a first outer ring raceway where the plurality of first rolling elements rolls and having a second outer ring raceway where the plurality of second rolling elements rolls;
a first inner ring body having a first inner ring raceway where the plurality of first rolling elements rolls, the first inner ring raceway facing the first outer ring raceway;
a second inner ring body located to provide an axial clearance between the first inner ring body and the second inner ring body, the second inner ring body having a second inner ring raceway where the plurality of second rolling elements rolls, the second inner ring raceway facing the second outer ring raceway; and
a protrusion including at least one of a first portion and a second portion, the first portion protruding toward the second inner ring body from a first end face of the first inner ring body that faces the second inner ring body, the second portion protruding toward the first inner ring body from a second end face of the second inner ring body that faces the first inner ring body, the protrusion being smaller in projected area than the first end face and the second end face when viewed axially.

8. The double row bearing device according to claim 7, wherein
the protrusion includes a first protrusion as the first portion and a second protrusion as the second portion,
the first inner ring body and the first protrusion are respectively identical in shape to the second inner ring body and the second protrusion, and
the first protrusion and the second protrusion axially face each other.

9. The double row bearing device according to claim 7 or 8, wherein
the protrusion is equal in inside diameter to the first inner ring body and the second inner ring body.

10. The double row bearing device according to claim 7 or 8, wherein
the protrusion is larger in inside diameter than the first inner ring body and the second inner ring body.
